# FASCICULE DE BREVET EUROPEEN

(11) **EP 0 952 077 B1**
(45) Date de publication et mention de la délivrance du brevet: **03.12.2003**
(21) Numéro de dépôt: 99420101.0
(22) Date de dépôt: 21.04.1999
(51) Int. Cl.: B62M 5/00, B62K 9/02

(54) **Pédalier pour jouet d'enfant et jouet d'enfant pourvu d'un tel pédalier**
Kurbelarm für Kinderspielzeug und Kinderspielzeug mit einem solchem Kurbelarm
Crank arm for child's toy and child's toy with such a crank arm

(30) Priorité: 22.04.1998 FR 9805277
(43) Date de publication de la demande: 27.10.1999
(73) Titulaire: Groupe Berchet, 01100 Oyonnax (FR)
(72) Inventeur: Pauly, Gilbert, 39130 Blye (FR)
(74) Mandataire: Myon, Gérard Jean-Pierre

(56) Documents cités:
- FR-A- 807 490
- US-A- 4 269 291

## Description

La présente invention concerne un jouet d'enfant équipé d'un tel pédalier.

De manière habituelle, ce type de jouet est formé par un cadre qui repose sur des roues, dont une directrice à l'avant, et supporte en outre un siège destiné à recevoir un enfant. Un système de direction, actionné par exemple par un guidon, permet d'orienter la roue avant et, ce faisant, de déterminer la trajectoire du jouet. La roue avant directrice est de surcroît munie d'un pédalier comprenant un axe d'entraînement traversant cette roue de part en part, deux manivelles propres à entrer en prise avec cet axe, aux deux extrémités de celui-ci, ainsi que deux pédales d'actionnement de ces manivelles.

Ce type de jouet présente cependant' certains inconvénients. Ainsi, lors d'une descente, la vitesse du jouet s'accroît sous l'effet de la gravité, de sorte que la fréquence de rotation des manivelles et des pédales augmente également, ce qui peut provoquer un risque de chute de l'enfant.

De plus, lorsque l'enfant est fatigué, un adulte est à même de pousser le jouet, par exemple au moyen d'un organe de guidage tel qu'une canne. Lors de l'avance du jouet, les pédales continuent à tourner, de sorte que l'enfant doit soit suivre leur mouvement, soit mettre les pieds dans le vide. Dans l'un ou l'autre de ces cas, l'enfant possède de forts risques d'être déséquilibré, voire de chuter.

L'invention propose donc de réaliser un jouet pourvu d'un pédalier lui permettant de pallier les inconvénients de l'art antérieur évoqué ci-dessus.

A cet effet, elle a pour objet un jouet d'enfant selon la revendication 1. Des caractéristiques avantageuses de l'invention font l'objet des sous-revendications.

L'invention va être décrite ci-après, en référence aux dessins annexés, donnés uniquement à titre d'exemple non limitatif, dans lesquels :
- la figure 1 est une vue en perspective éclatée, illustrant un pédalier conforme à un premier mode de réalisation de l'invention, équipant une roue avant d'un jouet pour enfant ;
- la figure 2 est une vue en coupe longitudinale du pédalier de la figure 1, dans la position de solidarisation de la manivelle et de l'axe d'entraînement ;
- la figure 3 est une coupe transversale selon la ligne III-III à la figure 2 ;
- la figure 4 est une vue en coupe analogue à la figure 2, dans la position de solidarisation de la manivelle avec le cadre du jouet ;
- la figure 5 est une vue en coupe selon la ligne V-V à la figure 4 ;
- la figure 6 est une vue schématique d'un jouet équipé du pédalier représenté aux figures 1 à 5, dans deux positions différentes de solidarisation de ses manivelles avec le cadre ;
- la figure 7 est une vue en perspective partielle d'un jouet équipé d'un pédalier conforme à un second mode de réalisation de l'invention, équipant une roue avant d'un jouet pour enfant ;
- la figure 8 est une vue en perspective éclatée du pédalier de la figure 7 ;
- les figures 9 et 10 sont des vues en coupe longitudinale dans des positions de solidarisation d'une des manivelles respectivement avec l'axe d'entraînement et avec le cadre du jouet.

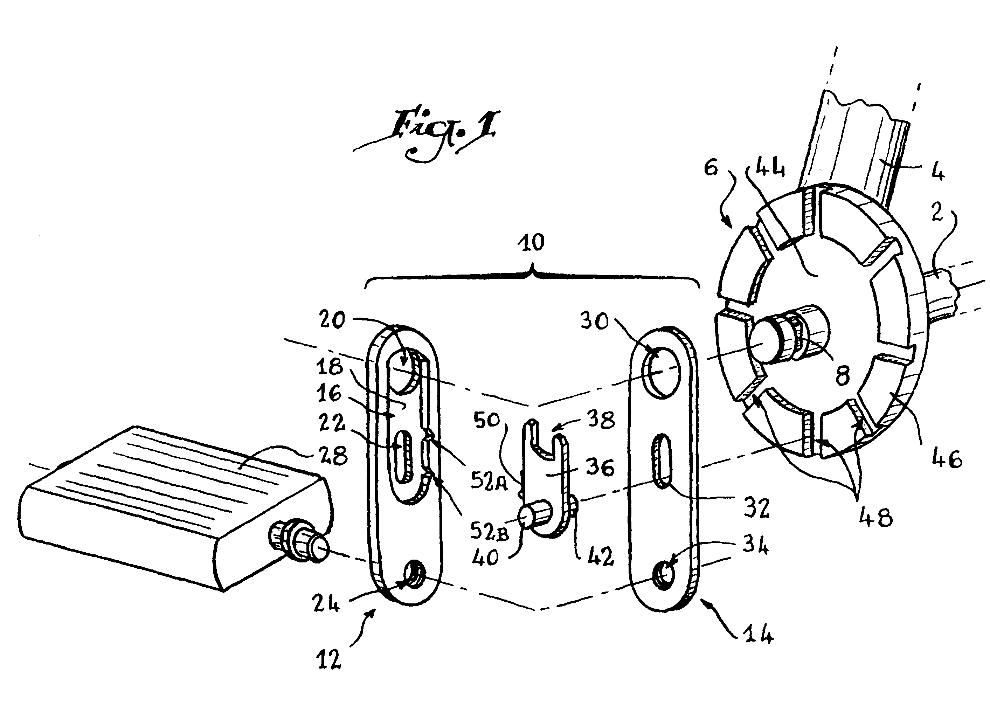

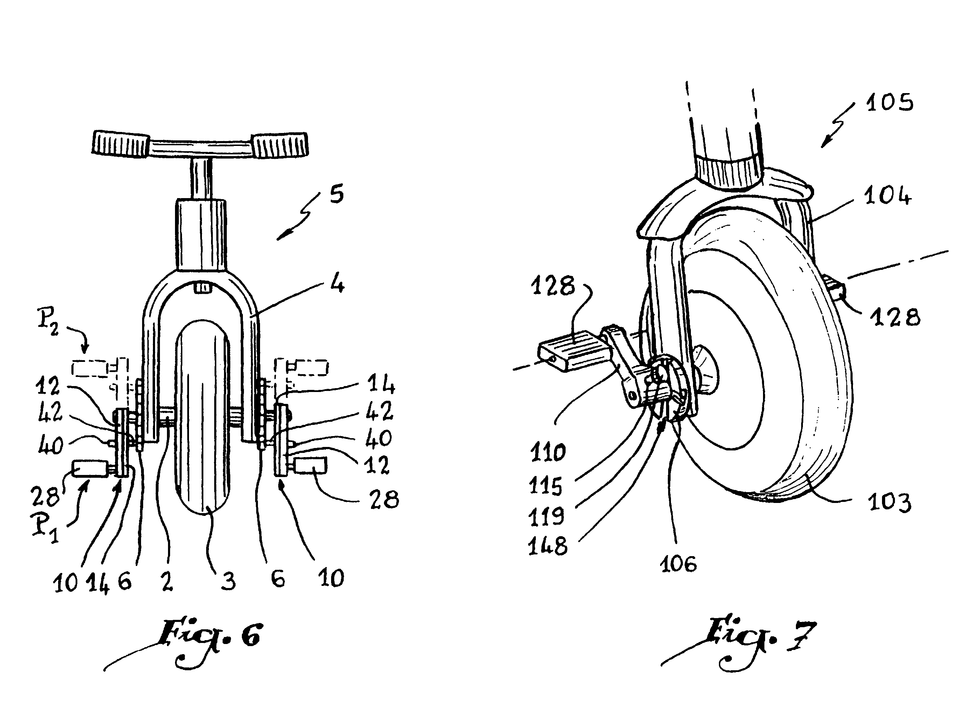

La figure 1 représente, vue en perspective éclatée, une partie d'un pédalier conforme à un premier mode de réalisation de l'invention. Ce pédalier comporte un axe d'entraînement 2 d'une roue 3 représentée à la figure 6, axe qui traverse de part en part une fourche 4 d'un cadre de jouet pour enfant, tel qu'un tricycle 5 représenté à la figure 6. Cet axe 2 traverse également deux flasques 6, solidaires de la fourche 4, et qui seront décrits plus en détail dans ce qui suit.

L'axe 2 présente un profil circulaire sur la majeure partie de sa longueur et comporte, au voisinage de chaque extrémité, une portion d'entraînement 8 de section sensiblement rectangulaire.

Le pédalier comprend également deux manivelles dont une seule 10 a été illustrée sur cette figure 1, formée de deux parties 12, 14. Dans ce qui suit et dans un souci de clarté, ces parties 12, 14 seront dénommées respectivement extérieure et intérieure, en se référant à la manivelle une fois montée sur l'axe d'entraînement 2.

La partie extérieure 12 de la manivelle 10 est creusée, dans sa face intérieure, d'un évidement en boutonnière 16 s'étendant sur une majeure partie de sa hauteur. Cette boutonnière 16 n'est pas débouchante, de sorte qu'elle définit un voile 18 au niveau de la face extérieure de la partie 12, voile dans lequel sont ménagés un orifice 20 de passage de l'axe 2 ainsi qu'une lumière oblongue 22. Cette partie extérieure 12 de la manivelle 10 est en outre percée, en dehors de la boutonnière 16, d'une ouverture taraudée 24 de réception d'une pédale 28.

La partie intérieure 14 de la manivelle 10 possède un contour globalement identique à celle de la partie extérieure 12, mais présente une épaisseur inférieure. Cette partie 14 est pourvue d'un orifice 30, d'une lumière oblongue 32 et d'une ouverture 34 disposés sensiblement en regard, une fois les deux parties 12, 14 assemblées, respectivement de l'orifice 20, de la lumière 22 et de l'ouverture 24 réalisés dans la partie extérieure 12.

Un tiroir 36 est à même de coulisser par rapport aux parois latérales de la boutonnière 16 de la partie extérieure 12. Ce tiroir 36 possède une extrémité 38 en forme de U, de profil correspondant à celui de la portion d'entraînement 8 de l'axe 2. Ce tiroir 36 est pourvu, à l'opposé de son extrémité 38, d'un doigt 40 extérieur apte à pénétrer au sein de la lumière 22 de la partie extérieure 12, et comprend également un téton intérieur 42 propre à coulisser au sein de la lumière 32 de la partie intérieure 14.

Le tiroir 36 est donc libre de coulisser par rapport à la manivelle, selon l'axe de cette dernière, et se trouve solidaire en rotation de cette manivelle lorsque celle-ci tourne.

Le flasque 6, solidaire de la fourche 4, possède une portion centrale 44 sensiblement en forme de disque, percé d'un orifice de passage de l'axe d'entraînement 2. Une couronne périphérique 46, plus épaisse, s'étend autour de la portion 44. Plusieurs rainures radiales 48 sont ménagées dans la face extérieure de cette couronne 46. Comme cela sera explicité dans ce qui suit, ces rainures permettent la solidarisation des manivelles par rapport au cadre, de sorte que les manivelles constituent des repose-pieds pour l'enfant. Il est à noter que la largeur de ces rainures correspond, au jeu près, au diamètre du téton 42, et que le fond de ces rainures 48 est disposé à fleur de la surface de la portion centrale 44.

On a représenté, sur cette figure 1, une seule extrémité de l'axe d'entraînement 2. Il convient de noter que l'autre extrémité de cet axe possède un profil analogue, et reçoit une manivelle identique à celle 10, pourvue d'un tiroir coulissant analogue à celui 36.

L'utilisation du pédalier conforme à l'invention va être décrite ci-dessous.

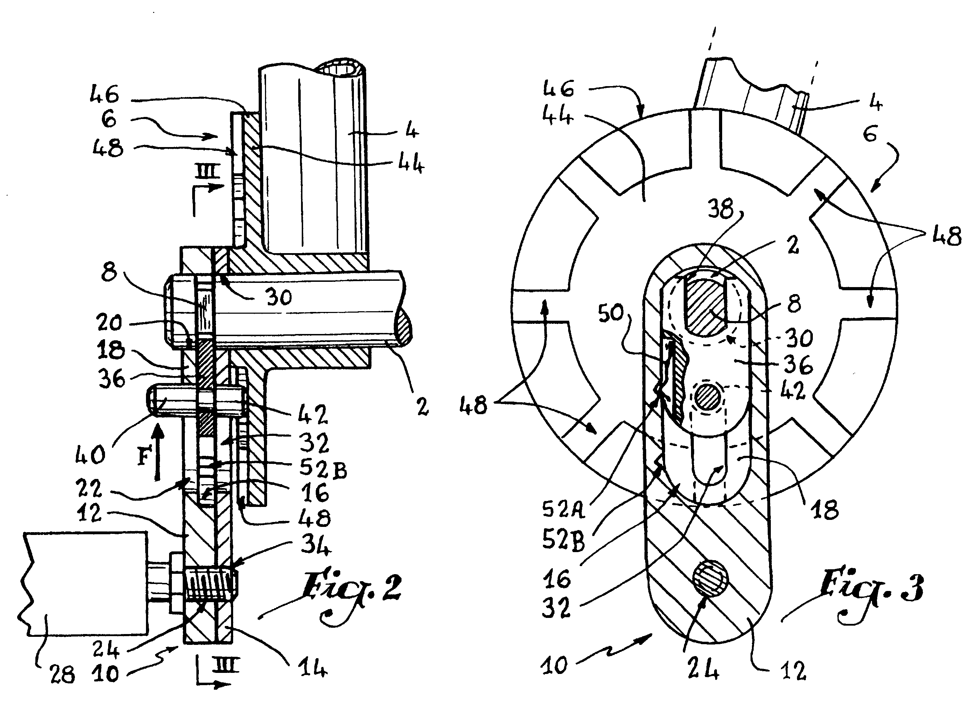

Dans une première position extrême du tiroir 36, représentée aux figures 2 et 3, l'extrémité 38 en forme de U de ce tiroir vient en prise avec les parois latérales de la portion d'entraînement 8 de l'axe 2. L'ensemble de la manivelle est donc solidaire de l'axe d'entraînement 2, de sorte que l'avance du tricycle peut être assurée par le pédalage d'un enfant assis sur ce tricycle. Il est à noter que l'assujettissement du tiroir par rapport à la manivelle, dans cette position de solidarisation de cette manivelle avec l'axe d'entraînement, est assuré par l'intermédiaire d'une lame élastique 50 faisant saillie à partir des parois latérales du tiroir 36 et coopérant avec une encoche correspondante 52A, ménagée sur la face latérale en regard de la boutonnière 16.

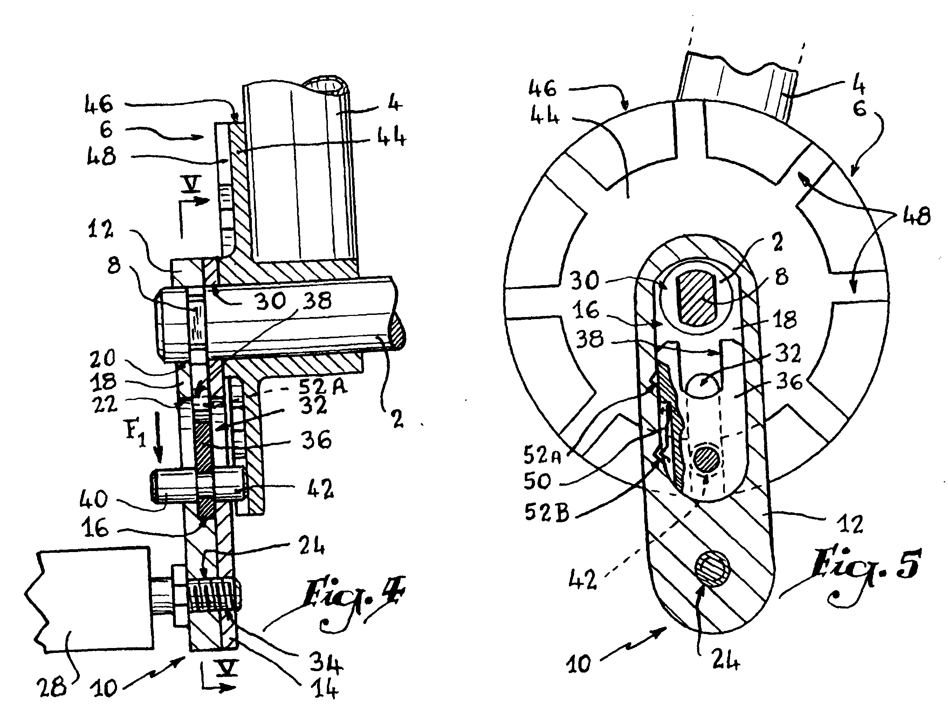

Si l'on désire désolidariser la manivelle par rapport à l'axe d'entraînement, on fait tourner cette dernière de manière à positionner le téton 42 à l'entrée de l'une des rainures 48, lesquelles apparaissent à travers les lumières 22 et 32. Puis, comme représenté aux figures 4 et 5, on fait coulisser le tiroir 36 par rapport à la manivelle, selon l'axe de celle-ci, par action sur le doigt de commande 40, accessible à un utilisateur au travers de la lumière 22. Cette action selon la flèche F₁ permet l'engagement du téton 42 au sein de l'une des rainures 48. Ce doigt de commande 40 et le téton 42 sont alors en butée contre les faces respectives des lumières 22, 32, opposées aux orifices 20, 30. Du fait de l'engagement du téton 42 au sein de l'une des rainures 48, la manivelle 10 se trouve solidaire du flasque 6, ce qui permet à l'enfant de reposer ses pieds sur les pédales. Si l'on veut revenir à l'agencement représenté aux figures 2 et 3, il convient de repousser le doigt 40 selon la flèche F.

En faisant à nouveau référence aux figures 4 et 5, étant donné que le tiroir 36 n'est plus en prise avec la portion d'entraînement 8 de l'axe 2, ce dernier est libre de pivoter sans entraîner la rotation des manivelles 10 solidaires du flasque 6, dans la mesure où les surfaces de contact respectives de l'axe 2 et des manivelles 10 sont circulaires.

Le blocage, dans cette position, du tiroir par rapport aux parois de la boutonnière 16, est assuré par la coopération de la lame 50 avec une seconde encoche 52B ménagée dans la paroi de la boutonnière 16.

De la sorte, on peut disposer les pédales de manière appropriée, afin qu'un enfant puisse y reposer ses pieds alors que l'avance du tricycle est assurée soit par la gravité lors d'une descente, soit par un adulte poussant le tricycle.

Cet agencement est représenté à la figure 6. Les manivelles 10 peuvent être bloquées dans une position basse P₁ convenant par exemple aux enfants de grande taille. Puis, en mettant ces manivelles à nouveau en prise avec l'axe 2, en les faisant tourner d'un demi-tour, puis en les solidarisant à nouveau avec le flasque 6, on peut disposer ces manivelles dans une position haute P₂ appropriée pour les plus petits enfants.

La figure 7 représente un tricycle 105 équipé d'un pédalier conforme à un second mode de réalisation de l'invention. Dans les figures 7 à 10, les éléments analogues à ceux décrits en référence aux figures précédentes seront affectés des mêmes numéros de référence, augmentés de 100.

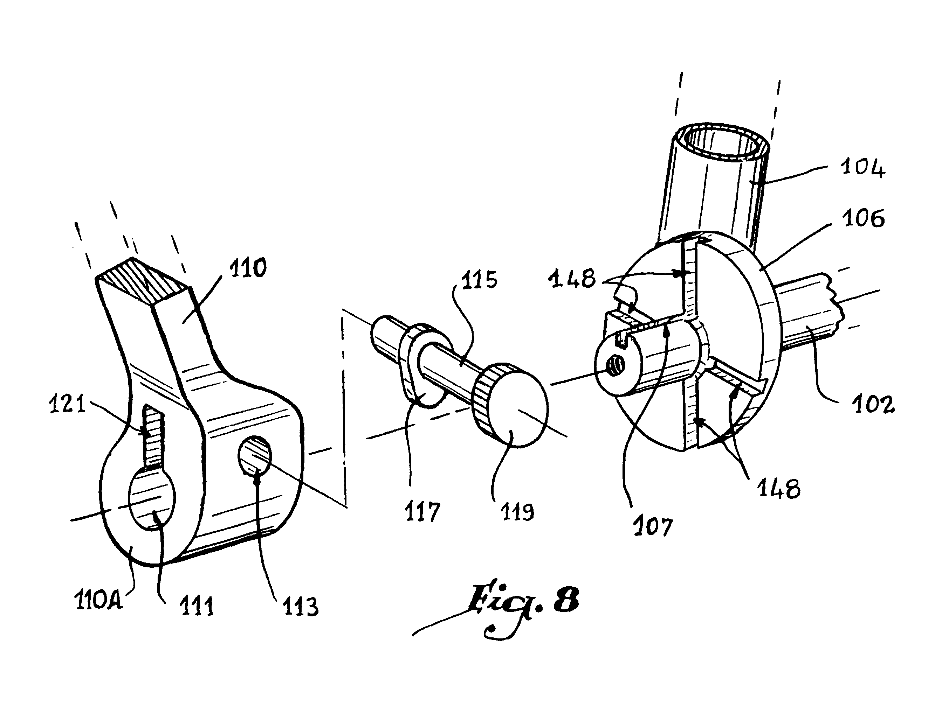

Comme le montre plus précisément la figure 8, le pédalier comprend un axe d'entraînement 102 solidaire d'une roue non représentée et traversant une fourche 104 et un flasque 106 solidaire de cette dernière. Cet axe 102 de profil circulaire est creusé, à ses deux extrémités, d'une fente 107 s'étendant selon la direction principale de cet axe 102.

Une manivelle 110, destinée à être fixée sur l'extrémité de l'axe 102, possède une tête 110A dans laquelle est ménagé un orifice circulaire 111 de passage de l'axe 102. Cette manivelle est également percée d'une ouverture débouchante 113, transversale par rapport à l'axe 102, destinée à la réception d'une tige 115 portant, dans sa partie médiane, une came excentrique 117. Le pivotement de la tige est assuré par un bouton moleté 119. Une saignée 121, qui s'étend selon la direction de l'axe 102, est ménagée dans le corps de la manivelle 110, afin de permettre le libre débattement de la came 117 par rapport à cette manivelle.

Le flasque 106 présente la forme d'un disque et comporte un orifice central de passage de l'axe 102. Plusieurs rainures radiales 148 sont ménagées dans la face extérieure de ce flasque 106.

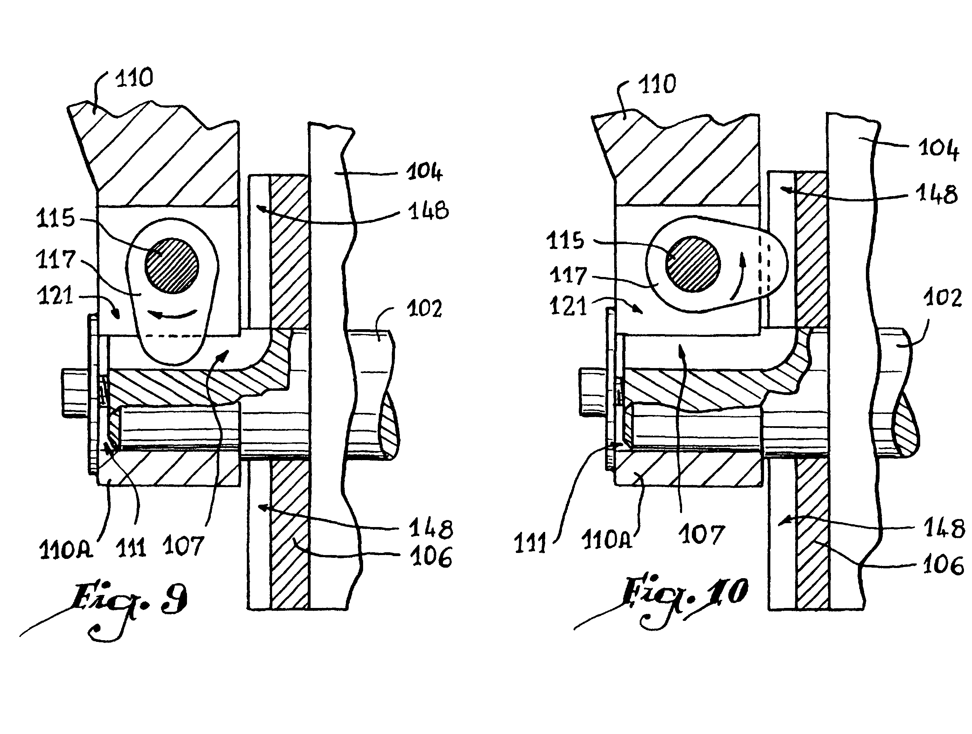

L'utilisation du pédalier conforme à ce second mode de réalisation va être décrite ci-dessous. Lorsque la came 117 pénètre, par son extrémité opposée à son axe de pivotement, dans la fente 107 ménagée dans l'axe 102, la manivelle se trouve solidaire de ce dernier par clavetage, de sorte que l'avance du tricycle peut être assurée par le pédalage de l'enfant. Cette position est représentée à la figure 9.

Lorsque l'on désire désolidariser la manivelle par rapport à l'axe 102, il convient de faire tourner cette dernière, afin de placer la fente 107 et donc la came 117 en regard de l'une des rainures 148 ménagées dans le flasque 106. Puis, on fait pivoter la came 117 au moyen du bouton 119, de manière à faire pénétrer cette came au sein de l'une des rainures 148. La manivelle 110 est alors solidaire du flasque 106 et donc de la fourche 104. En outre, la libre rotation de la roue avant 103 est permise, étant donné que l'axe 102 et la manivelle 110 peuvent pivoter l'un par rapport à l'autre lorsque la came 117 est dégagée de la saignée 107.

Des organes d'encliquetage appropriés (non représentés) peuvent comme précédemment être prévus pour définir les deux positions instables de la came 117 illustrées aux figures 9 et 10.

L'invention permet de réaliser les objectifs précédemment mentionnés. En effet, l'emploi de moyens de solidarisation sélective des manivelles avec l'axe d'entraînement ou avec le cadre, réduit les risques inhérents à l'utilisation du jouet par l'enfant. Ainsi, lorsque la topographie permet à l'enfant de pédaler à la fois sans fatigue excessive ni sans danger dû à une vitesse trop élevée, ces moyens de solidarisation sont actionnés de manière que les manivelles soient en prise avec l'axe d'actionnement.

En revanche, lorsque l'enfant est fatigué ou trop petit pour pédaler, ou bien encore lorsque la topographie induit des risques liés à une vitesse trop importante, on actionne les moyens de solidarisation de manière à mettre en prise mutuelle les manivelles avec le cadre. Dans cette configuration, les manivelles sont fixes par rapport au cadre, de sorte qu'elles assument une fonction de repose-pieds pour l'enfant. Ce dernier est donc assis sur le siège de manière stable, les risques de chute étant notablement réduits par rapport à l'art antérieur, dans les cas où l'avance du tricycle est assurée par un adulte ou lorsque la vitesse du jouet est élevée, comme en descente.

L'utilisation d'un flasque possédant plusieurs rainures s'étendant à la périphérie d'un disque, permet d'assujettir sélectivement les manivelles au cadre, selon plusieurs positions différentes. Ainsi, il est possible de rapprocher ou d'éloigner à loisir les pédales par rapport au siège, en fonction de la taille de l'enfant.

## Revendications

1. Jouet d'enfant, notamment tricycle (5 ; 105), tracteur ou porteur, comprenant un cadre (4 ; 104) supportant un siège et reposant sur au moins deux roues (3 ; 103), dont au moins une roue avant (3 ; 103) directrice munie d'un pédalier (2, 12, 28 ; 102, 110, 128), ce pédalier comprenant un axe d'entraînement (2 ; 102) destiné à traverser la ou chaque roue avant (3 ; 103) dudit jouet en étant solidaire en rotation de celle-ci, deux manivelles (10 ; 110) propres à entrer en prise avec ledit axe (2 ; 102) aux deux extrémités de celui-ci et deux pédales (28 ; 128) d'actionnement desdites manivelles, **caractérisé en ce que** ledit pédalier est pourvu de moyens (36 ; 117) de solidarisation sélective de chaque manivelle (10 ; 110) soit avec ledit axe (2 ; 102), soit avec le cadre (4 ; 104) dudit jouet.

2. Jouet d'enfant suivant la revendication 1, **caractérisé en ce que** les moyens de solidarisation sélective comprennent un élément (36 ; 117) monté mobile sur la manivelle entre une position de prise avec l'axe et une position de prise avec ledit cadre, et un organe (40 ; 119) d'actionnement de cet élément.

3. Jouet d'enfant suivant la revendication 2, **caractérisé en ce que** l'axe (2 ; 102) possède une portion d'entraînement (8 ; 107) non circulaire, l'élément mobile (36 ; 117) comprenant une extrémité d'entraînement (38) de forme correspondante.

4. Jouet d'enfant selon la revendication 2 ou 3, **caractérisé en ce que** l'élément mobile (36 ; 117) possède un organe de blocage, notamment d'encliquetage (50), propre à coopérer sélectivement avec deux reliefs (52A, 52B) de la manivelle (10) pour définir lesdites deux positions de prise.

5. Jouet d'enfant suivant l'une quelconque des revendications 2 à 4, **caractérisé en ce que** l'élément mobile (36) est monté coulissant sur la manivelle et possède, à l'opposé de son extrémité d'entraînement (38), un téton (42) propre à être engagé dans une rainure (48) dont est pourvu ledit cadre.

6. Jouet d'enfant selon la revendication 5, **caractérisé en ce que** l'élément coulissant est pourvu d'un doigt de commande (40) faisant saillie vers l'extérieur de la manivelle (10), à l'opposé de ladite roue avant (3).

7. Jouet d'enfant suivant l'une quelconque des revendications 2 à 4, **caractérisé en ce que** ledit élément mobile est un excentrique (117) monté à pivotement sur ladite manivelle (110) et mobile entre une position de prise avec l'axe (102) et une position de prise avec le cadre (104).

8. Jouet d'enfant suivant la revendication 7, **caractérisé en ce que** l'extrémité dudit excentrique (117), opposée à son axe de pivotement, est propre à pénétrer sélectivement d'une part dans une fente longitudinale (107) ménagée dans l'axe d'entraînement (102), et d'autre part dans une rainure (148) dont est pourvu ledit cadre (104).

9. Jouet d'enfant selon la revendication 5 ou 8, **caractérisé en ce que** ledit cadre porte un flasque (6 ; 106) traversé par l'axe d'entraînement et possèdant plusieurs rainures (48 ; 148) radiales disposées à la périphérie d'un disque central (44) dudit flasque.

## Claims

1. Child's toy, in particular a tricycle (5; 105) to be ridden or pulled, comprising a frame (4; 104) which bears a seat and is supported on at least two wheels (3; 103), at least one of which is a front drive wheel (3; 103) which is provided with a pedal and gear mechanism (2, 12, 28; 102, 110, 128), this pedal and gear mechanism comprising a drive axle (2; 102) which is designed to pass through the or each front wheel (3; 103) of the said toy whilst being integral in rotation with the wheel, two cranks (10; 110) which can engage with the said axle (2; 102) at both ends of the latter and two pedals (28; 128) for activation of the said cranks, **characterised in that** the said pedal and gear mechanism is provided with means (36; 117) for rendering each crank (10; 110) integral selectively either with the said axle (2; 102), or with the frame (4; 104) of the said toy.

2. Child's toy according to claim 1, **characterised in that** the means for rendering integral selectively comprise an element (36; 117) which is fitted such as to be mobile on the crank between a position of engagement with the axle and a position of engagement with the said frame, and a unit (40; 119) for activation of this element.

3. Child's toy according to claim 2, **characterised in that** the axle (2; 102) has a non-circular drive portion (8; 107), the mobile element (36; 117) comprising a drive end (38) with a corresponding shape.

4. Child's toy according to claim 2 or claim 3, **characterised in that** the mobile element (36; 117) has a locking unit, in particular for catching (50), which can co-operate selectively with two reliefs (52A, 52B) in the crank (10) in order to define the said two engagement positions.

5. Child's toy according to any one of claims 2 to 4, **characterised in that** the mobile element (36) is fitted such as to slide on the crank, and, opposite its drive end (38), has a stud (42) which can be engaged in a groove (48) with which the said frame is provided.

6. Child's toy according to claim 5, **characterised in that** the sliding element is provided with a control finger (40) which projects towards the exterior of the crank (10), opposite the said front wheel (3).

7. Child's toy according to any one of claims 2 to 4, **characterised in that** the said mobile element is a cam (117) which is fitted such as to pivot on the said crank (110), and is mobile between a position of engagement with the axle (102) and a position of engagement with the frame (104).

8. Child's toy according to claim 7, **characterised in that** the end of the said cam (117) which is opposite its axis of pivoting, can penetrate selectively, firstly in a longitudinal slot (107) which is provided in the drive axle (102), and secondly in a groove (148) with which the said frame (104) is provided.

9. Child's toy according to claim 5 or claim 8, **characterised in that** the said frame supports a flange (6; 106) through which the drive axle passes, and has a plurality of radial grooves (48; 148) disposed at the periphery of a central disc (44) of the said flange.

## Patentansprüche

1. Kinderspielzeug, insbesondere Dreirad (5; 105), Traktor oder Träger, umfassend einen Rahmen (4; 104), der einen Sitz trägt und auf mindestens zwei Rädern (3; 103) aufliegt, wobei mindestens ein lenkendes Vorderrad (3; 103) mit einer Tretkurbel (2, 12, 28; 102, 110. 128) versehen ist, wobei diese Tretkurbel ein Antriebsachse (2: 102), die dazu bestimmt ist, durch das bzw. jedes Vorderrad (3; 103) des Spielzeugs hindurchzugehen, indem sie drehfest mit diesem verbunden ist, zwei Kurbeln (10; 110), die mit der Achse (2; 102) an den beiden Enden derselben in Eingriff stehen können, und zwei Pedale (28; 128) zur Betätigung der Kurbeln umfasst. **dadurch gekennzeichnet, daß** die Tretkurbel mit Mitteln (36; 117) zur selektiven Verbindung jeder Kurbel (10; 110) entweder mit der Achse (2; 102) oder mit dem Rahmen (4: 104) des Spielzeugs versehen ist.

2. Kinderspielzeug nach Anspruch 1, **dadurch gekennzeichnet, daß** die Mittel zur selektiven Verbindung ein Element (36; 117), das beweglich auf der Kurbel zwischen einer Eingriffsposition mit der Achse und einer Eingriffsposition mit dem Rahmen montiert ist, und ein Element (40: 119) zur Betätigung dieses Elements umfassen.

3. Kinderspielzeug nach Anspruch 2, **dadurch gekennzeichnet, daß** die Achse (2; 102) einen nicht kreisförmigen Antriebsabschnitt (8; 107) umfasst, wobei das bewegliche Element (36; 117) ein Antriebsende (38) mit entsprechender Form aufweist.

4. Kinderspielzeug nach Anspruch 2 oder 3, **dadurch gekennzeichnet, daß** das bewegliche Element (36; 117) ein Feststellelement, insbesondere Rastelement (50), umfasst, das selektiv mit zwei Vorsprüngen (52A, 52B) der Kurbel (10) zusammenwirken kann, um die beiden Eingriffspositionen zu definieren.

5. Kinderspielzeug nach einem der Ansprüche 2 bis 4, **dadurch gekennzeichnet, dass** das bewegliche Element (36) gleitend auf der Kurbel montiert ist und gegenüber seinem Antriebsende (38) einen Zapfen (42) umfasst, der in eine Nut (48) eingreifen kann. mit der der Rahmen versehen ist.

6. Kinderspielzeug nach Anspruch 5, **dadurch gekennzeichnet, daß** das gleitende Element mit einem Steuerfinger (40) versehen ist, der außerhalb der Kurbel (10) gegenüber dem Vorderrad (3) vorspringt.

7. Kinderspielzeug nach einem der Ansprüche 2 bis 4, **dadurch gekennzeichnet, daß** das bewegliche Element ein Exzenter (117) ist, der schwenkbar auf der Kurbel (110) befestigt und zwischen einer Eingriffsposition mit der Achse (102) und einer Eingriffsposition mit dem Rahmen (104) beweglich ist.

8. Kinderspielzeug nach Anspruch 7, **dadurch gekennzeichnet, daß** das Ende des Exzenters (117), das seiner Schwenkachse gegenüber liegt, selektiv einerseits in einen Längsschlitz (107), der in der Antriebsachse (102) vorgesehen ist, und andererseits in eine Nut (148), mit der der Rahmen (104) versehen ist, eindringen kann.

9. Kinderspielzeug nach Anspruch 5 oder 8, **dadurch gekennzeichnet. daß** der Rahmen einen Flansch (6; 106) trägt, durch den hindurch die Antriebsachse verläuft und der mehrere Radialnuten (48; 148) besitzt, die an der Peripherie einer Mittelscheibe (44) des Flansches vorgesehen sind.
